# EUROPEAN PATENT APPLICATION

(11) **EP 3 358 507 A1**
(43) Date of publication of application: **08.08.2018**
(21) Application number: 16851363.8
(22) Date of filing: 23.09.2016
(51) Int. Cl.: G06K 13/06, G06K 7/08

(54) **CARD READER**

(30) Priority: 30.09.2015 JP 2015192659
(71) Applicant: Nidec Sankyo Corporation, Suwa-gun, Nagano 393-8511 (JP)
(72) Inventor: MIYAZAWA, Shinya, Suwa-gun Nagano 393-8511 (JP); MIZAWA, Mamoru, Suwa-gun Nagano 393-8511 (JP)
(74) Representative: Becker Kurig Straus
(86) International application number: PCT/JP2016/078041
(87) International publication number: WO 2017/057189

(57) **Abstract**

Provided is a card reader with which it is possible to prevent the loading of an irregularly shaped card, and to reduce the cost. This card reader is equipped with: a shutter member 7 that closes off a card passage; a biasing member 13 that biases the shutter member 7 toward a closed position 7A that closes the card passage; lever members 8 having a card contact part 8a contacted by a card 2 when the card 2 has a regular width, and a restricting part 8b that restricts the operation of the shutter member 7 in the closed position 7A; and biasing members that bias the lever members 8 toward a restricting position 8A where the restricting parts 8b restrict the operation of the shutter member 7. By means of this card reader, when an inserted card 2 contacts the card contact parts 8a the restriction of the shutter member 7 by the restricting parts 8b is released, and in this state, when the card 2 contacts the shutter member 7 and the shutter member 7 is pressed, the shutter member 7 operates so as to allow passage of the card 2.

## Description

### TECHNICAL FIELD

The present invention relates to a card reader for performing predetermined processing on a card.

### BACKGROUND ART

A card reader for performing predetermined processing on a card is conventionally known (for example, refer to Patent Literature 1). In the card reader described in Patent Literature 1, a card insertion slot into which a card is to be inserted and a card conveyance path through which the card that is inserted into the card insertion slot is to be conveyed are formed. Also, this card reader is equipped with: a shutter member that is movable between a closed position at which the card conveyance path is to be closed and an open position at which the card conveyance path is to be opened; a solenoid that is linked with the shutter member; a width detection mechanism that detects a width of the card that is inserted into the card insertion slot; and a thickness detection mechanism that detects a thickness of the card that is inserted into the card insertion slot.

In the card reader described in Patent Literature 1, the width detection mechanism is equipped with: a lever member; and an optical sensor that detects a displacement of the lever member. The thickness detection mechanism is equipped with: a thickness direction contact member; and an optical sensor that detects a displacement of the thickness direction contact member. In this card reader, during a standby mode before the card is inserted into the card insertion slot, the shutter member is present at the closed position at which the card conveyance path is to be closed. Also, in this card reader, for example, when it is detected that a regularly shaped card has been inserted into the card insertion slot based on a result of detection at the width detection mechanism and the thickness detection mechanism, the shutter member is moved from the closed position to the open position by motive power of the solenoid, and it is possible to load the card to the inside of the card reader.

### CITATION LIST

### PATENT LITERATURE

Patent Literature 1: Japanese Unexamined Patent Application Publication No. 2011-209981

### SUMMARY

### TECHNICAL PROBLEM

In the card reader described in Patent Literature 1, in a case where it is detected that the regularly shaped has been inserted into the card insertion slot based on the result of the detection at the width detection mechanism and the thickness detection mechanism, the shutter member is moved from the closed position to the open position by the motive power of the solenoid, and it is possible to load the card to the inside of the card reader and thus it is possible to prevent an irregularly shaped card from being loaded to the inside of the card reader.

However, this card reader requires: the solenoid that drives the shutter member; and the optical sensor that constitutes the width detection mechanism and the thickness detection mechanism as constituent elements for preventing an irregularly shaped card from being loaded to the inside of the card reader. Also, this card reader requires a control circuit that drives the solenoid based on a result of detection at the sensor. Therefore, in the card reader described in Patent Literature 1, the cost of the card reader increases.

Accordingly, a problem to be solved by the present invention is to provide a card reader with which it is not only possible to prevent an irregularly shaped card from being loaded to the inside of the card reader but also possible to reduce the cost of the card reader.

### SOLUTION TO PROBLEM

In order to solve the problem described above, a card reader of the present invention includes: a card insertion slot into which a card is to be inserted; a card passageway through which the card that is inserted into the card insertion slot passes; a shutter member for closing the card passageway; and a shutter urging member that urges the shutter member toward a closed position at which the shutter member closes off the card passageway, the card reader including: a lever member having: a card contact part with which the card comes into contact in at least either one of a case in which, a direction orthogonal to a passing direction of the card passing through the card passageway and a thickness direction of the card being defined as a first direction, the width in the first direction of the card that is inserted is a regular width and a case in which a thickness of the card that is inserted into the card insertion slot is a regular thickness; and a restriction part that restricts operation of the shutter member at the closed position; and a lever urging member that urges the lever member toward a restriction position at which the restriction part restricts the operation of the shutter member, wherein when the card that is inserted into the card insertion slot comes into contact with the card contact part, the lever member shifts to a release position at which a restricted state of the shutter member by the restriction part is released and thereafter when the card that is inserted further comes into contact with the shutter member and the shutter member is pressed by the card, the shutter member operates so as to allow passage of the card.

The card reader of the present invention includes: a lever member having: a card contact part with which a card comes into contact in a case where the width in the first direction of the card that is inserted into the card insertion slot in the first direction is a regular width, or alternatively, in a case where a thickness of the inserted card is a regular thickness; and a restriction part that restricts operation of a shutter member at a closed position; and a lever urging member that urges the lever member toward a restriction position at which a restriction part restricts the operation of the shutter member, wherein when the card that is inserted into the card insertion slot comes into contact with the card contact part, the lever member shifts to the release position at which the restricted state of the shutter member by the restriction part is released. That is, in the present invention, in a case where a width of a card that is inserted into the card insertion slot is not a regular width, or alternatively, in a case where a thickness of the inserted card is not a regular thickness, the restricted state of the shutter member is not released, and the state in which the shutter member closes off the card passageway is maintained. Therefore, in the present invention, it is possible to prevent an irregularly shaped card from being loaded to the inside of the card reader.

Also, in the present invention, the shutter member is urged toward the closed position by the shutter urging member, and after the lever member has shifted to the release position, when the card that is inserted further comes into contact with the shutter member and then the shutter member is pressed by the card, the shutter member operates so as to allow passage of the card and thus there is no need for a driving source that drives the shutter member. In addition, in the present invention, there is no need for the sensor that is included in the card reader described in Patent Literature 1 as well. Therefore, it is not only possible to prevent an irregular shaped card from being loaded to the inside of the card reader but also possible to reduce the cost of the card reader.

In the present invention, for example, the card contact part is disposed to face the card passageway from both sides of the card passageway in the first direction, and in the case where the width in the first direction of the card is a regular width, the card comes into contact with the card contact part and then the lever member shifts to the release position. In this case, it is possible to prevent an irregularly shaped card having a small width in the first direction thereof from being loaded to the inside of the card reader.

In the present invention, it is preferable that the shutter member and the lever member be disposed to be adjacent to each other in the first direction. That is, in the present invention, it is preferable that the shutter member and the lever member be disposed at a substantially same position in the card passing direction. With such a configuration, it is possible to downsize the card reader in the card passing direction in comparison with a case in which the shutter member and the lever member are disposed at the shifted positions in the card passing direction.

In the present invention, the lever member is made turnable with the card passing direction being defined as an axial direction of turning, for example. Also, in the present invention, the shutter member is made turnable with the first direction being defined as an axial direction of turning, for example. In this case, for example, the card reader is equipped with: a supporting shaft that turnably supports the shutter member; the supporting shaft is disposed so that an axial direction of the supporting shaft and the first direction are coincident with each other; the shutter member is equipped with: a supporting part formed in a substantially cylindrical shape and supported by the supporting shaft; and a closing part that closes off the card passageway; the supporting shaft is inserted into an inner circumferential side of the supporting part; in the supporting part, a protrusion part that protrudes outside in a radial direction of the supporting part is formed; and when the closing part is pressed in an insertion direction of a card for the card insertion slot in a state in which the shutter member is present at the closed position and the lever member is present at the restriction position, the protrusion part comes into contact with the restriction part, and the operation of the shutter member at the closed position is restricted.

In this case, it is preferable that the restriction part be disposed only at the side with which the protrusion part comes into contact when the closing part is pressed in the insertion direction of the card in the state in which the shutter member is present at the closed position and the lever member is present at the restriction position. With such a configuration, even if a card of which width in the first direction at a tip end side in the insertion direction is a regular width and of which thickness at the tip end side is a regular thickness, but of which width in the first direction at a rear end side of the card in the insertion direction of the card (that is, tip end side of the card in the discharge direction of the card) is not a regular width, or a card of which thickness at the rear end side is not a regular thickness, has been loaded to the inside of the card reader, when the rear end of the card that is discharged from the card reader comes into contact with the closing part of the shutter member, it is possible to turn the shutter member in the direction in which the shutter member opens the card passageway. Therefore, even if the card of which width in the first direction at the tip end is the regular width and of which thickness at the tip end side is the regular thickness, but of which width in the first direction at the rear end side is not the regular width, or the card of which thickness at the rear end side is not the regular thickness, has been loaded to the inside of the card reader, it is possible to discharge, from the card reader, the card that is loaded in the card reader.

In the present invention, it is preferable that: the card reader be equipped with: a supporting shaft that turnably supports the shutter member; and a frame that constitutes one face of the card passageway in a thickness direction of a card; the supporting shaft be disposed so that the axial direction of the supporting shaft and the first direction are coincident with each other; the shutter urging member be a twisted coil spring; the twisted coil spring be equipped with: a cylinder part formed in a cylindrical shape into which the supporting shaft is to be inserted; a first arm part extending from one side in a passing direction of the card to one side in the thickness direction of the card, at one end of the cylinder part; and a second arm part extending from the other side in the card passing direction to one side in the thickness direction of the card, at the other end of the cylinder part; in the frame, a first contact part with which a tip end part of the first arm part is capable of coming into contact from the other side in the passing direction of the card and a second contact part with which a tip end part of the second arm part is capable of coming into contact from one side in the passing direction of the card be formed; in the shutter member, a third contact part which is capable of coming into contact with the first arm part from one side in the passing direction of the card and a fourth contact part which is capable of coming into contact with the second arm part from the other side in the passing direction of the card be formed; and when the shutter member is present at the closed position, the tip end part of the first arm part come into contact with the first contact part, and the tip end part of the second arm part come into contact with the second contact part. With such a configuration, even if the shutter member at the closed position turns in any direction about the supporting shaft, it is possible to return the shutter member to the closed position by a common shutter urging member. Therefore, it is possible to simplify the configuration of the card reader.

In the present invention, it is preferable that when the shutter member is present at the closed position, the third contact part come into contact with the first arm part from one side in the passing direction of the card, and the fourth contact part come into contact with the second arm part from the other side in the passing direction of the card. With such a configuration, it is possible to restrain an unsteady state of the shutter member at the closed position. Therefore, it is possible to prevent interference between the restriction part of the lever member and the shutter member, exerted by the unsteady state of the shutter member, when the lever member shifts from the release position to the restriction position in the state in which the shutter member is present at the closed position. As a result, it is possible to reliably return the lever member from the release position to the restriction position.

### EFFECT OF THE INVENTION

As described above, in the present invention, it is possible to provide a card reader with which it is not only possible to prevent an irregularly formed card from being loaded to the inside of the card reader but also possible to reduce the cost of the card reader.

### BRIEF DESCRIPTION OF THE DRAWINGS

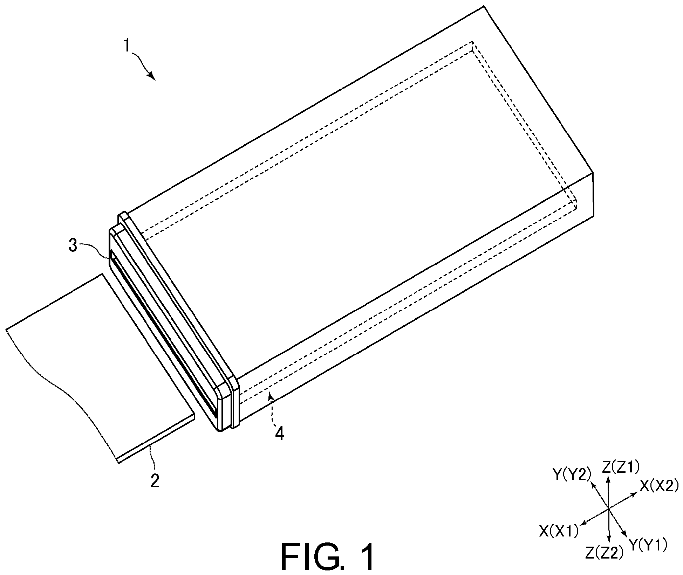

FIG. 1 is a perspective view of a card reader according to an embodiment of the present invention.

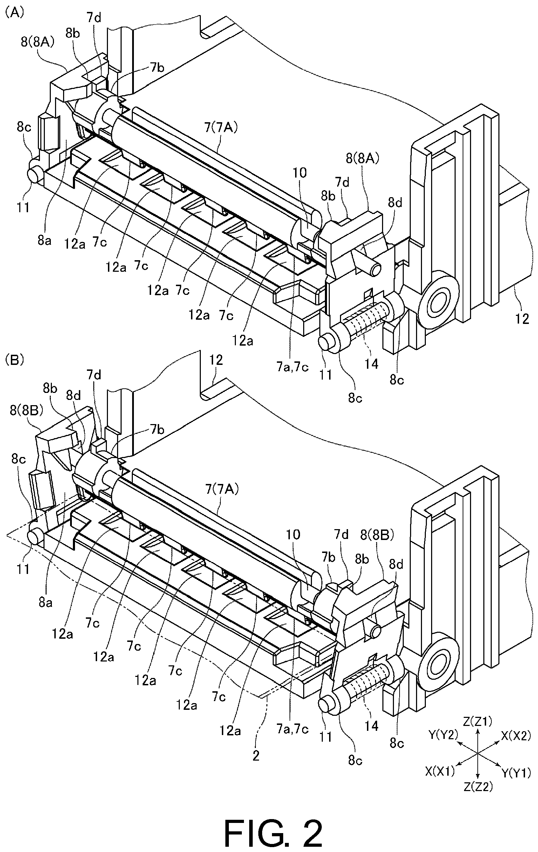

FIG. 2 is a perspective view for illustrating a configuration of a front end side portion of the card reader shown in FIG. 1, wherein FIG. 2 (A) is a view showing a state in which the operation of the shutter member is restricted, and FIG. 2 (B) is a view showing a state in which restriction of the operation of the shutter member is released.

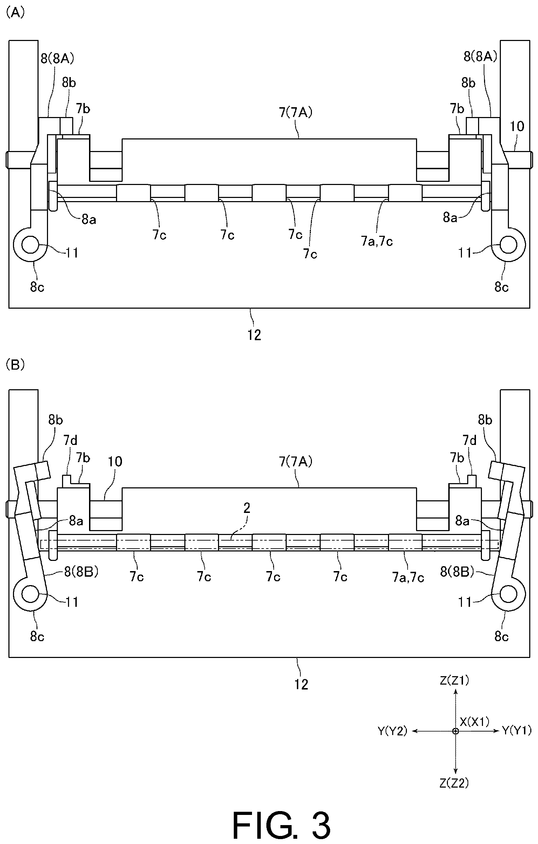

FIG. 3 is a front view of the front end side portion of the card reader shown in FIG. 2, wherein FIG. 3 (A) is a view showing a state in which the operation of the shutter member is restricted, and FIG. 3 (B) is a view showing a state in which restriction of the operation of the shutter member is released.

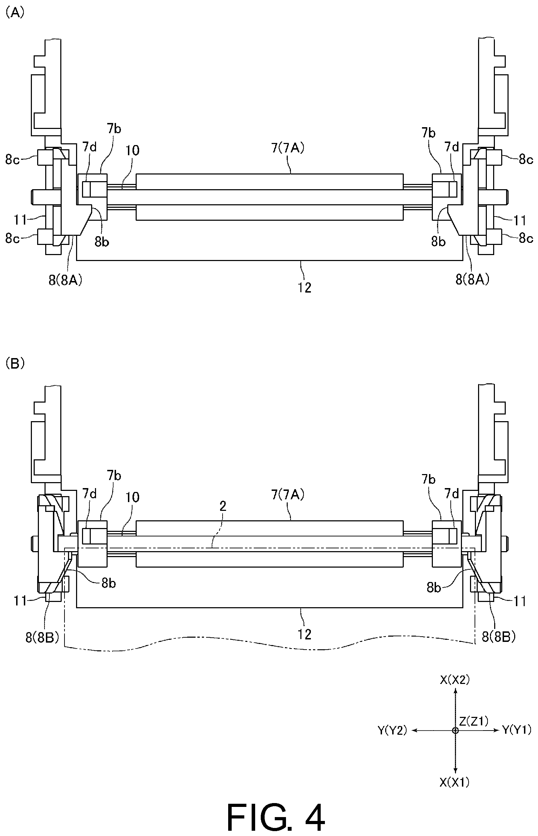

FIG. 4 is a plan view of the front end side portion of the card reader shown in FIG. 2, wherein FIG. 4 (A) is a view showing a state in which the operation of the shutter member is restricted, and FIG. 4 (B) is a view showing a state in which restriction of the operation of the shutter member is released.

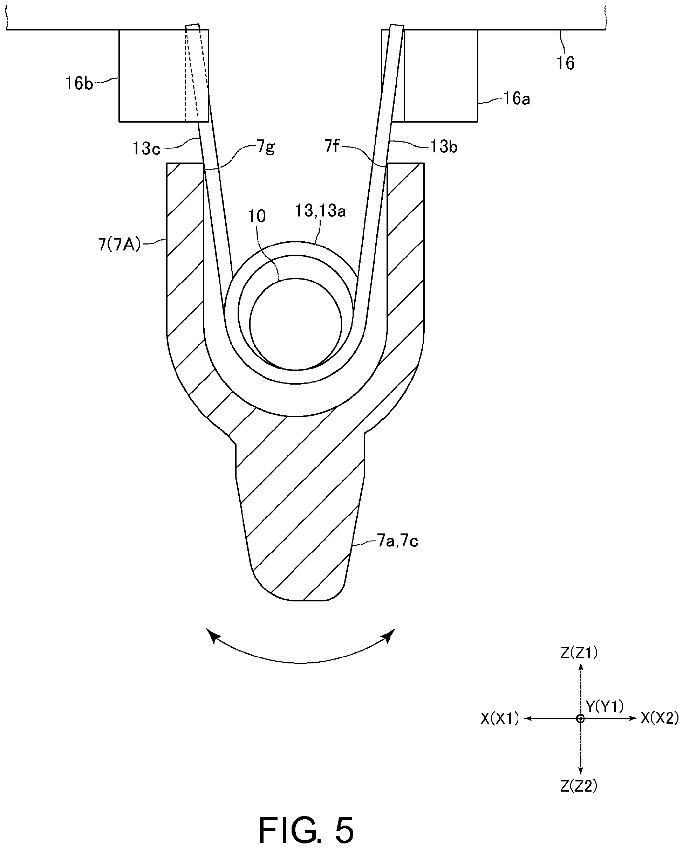

FIG. 5 is a schematic view for illustrating an urging state of the shutter member shown in FIG. 2.

### DESCRIPTION OF EMBODIMENTS

Hereinafter, embodiments of the present invention will be described with reference to the drawings.

### (Schematic Configuration of Card Reader)

FIG. 1 is a perspective view of a card reader 1 according to an embodiment of the present invention. FIG. 2 is a perspective view for illustrating a configuration of a front end side portion of the card reader 1 shown in FIG. 1, wherein FIG. 2 (A) is a view showing a state in which the operation of a shutter member 7 is restricted, and FIG. 2(B) is a view showing a state in which restriction of the operation of the shutter member 7 is released.

The card reader 1 of the embodiment is a device for reading data recorded in a card 2 or recording data into the card 2, and is used to be mounted at a predetermined host device such as ATM (Automated Teller Machine) or the like. In the card reader 1, a card insertion slot 3 into which the card 2 is to be inserted and a card passageway 4 through which the card 2 that is inserted into the card insertion slot 3 passes are formed. The card passageway 4 is formed so as to communicate with the card insertion slot 3.

The card 2 is a vinyl chloride-based card of which thickness is of the order of 0.7 to 0.8 mm. The card 2 that is regularly shaped and is available for use in the card reader 1 is also a card with magnetic stripe in conformity with International Standard (for example, ISO/IEC7811) or Japanese Industrial Standards JIS (for example, JISX6302), and is formed in a substantially rectangular shape. On a back face of the card 2, a magnetic stripe in which magnetic data is to be recorded is formed. Incidentally, an IC chip may be incorporated in the card 2.

In the card passageway 4, the card 2 passes in the X direction shown in FIG. 1 or the like. Specifically, the card 2 is inserted into the card insertion slot 3 in the X2 direction shown in FIG. 1 or the like, and the card 2 is discharged from the card insertion slot 3 in the X1 direction shown in FIG. 1 or the like. That is, the X direction is a passing direction of the card 2, the X2 direction is an insertion direction of the card 2, and the X1 direction is a discharge direction of the card 2. Also, the Z direction of FIG. 1 or the like that is orthogonal to the X direction is a thickness direction of the card 2 that passes through the card passageway 4, and the Y direction of FIG. 1 or the like that is orthogonal to the X direction and the Z direction is a widthwise direction of the card 2 that passes through the card passageway 4.

In the embodiment, the card 2 is loaded to the inside of the card reader 1 so that the longitudinal direction of the card 2 and the X direction are coincident with each other (that is, so that the lateral direction of the card 2 and the Y direction coincident with each other). In the following description, it is presupposed that the X direction is the longitudinal direction, the Y direction is the transverse direction, and the Z direction is the vertical direction. Also, it is presupposed that the X1 direction side is the front side, the X2 direction side is the depth side, the Y1 direction side is the right side, the Y2 direction side is the left side, the Z1 direction side is the upper side, and the Z2 direction side is the lower side. The transverse direction (Y direction) of the embodiment is the first direction.

The card reader 1 is equipped with a magnetic head (not shown) that reads magnetic data recorded in the card 2 or records magnetic data into the card 2. Also, the card reader 1 is equipped with a card conveyance mechanism (not shown) that conveys the card 2 in the card passageway 4. The card conveyance mechanism is equipped with: a conveyance roller that conveys the card 2; a pad roller that is disposed to oppose to the conveyance roller; a motor that drives the conveyance roller; and a motive power transmission mechanism that transmits motive power of the motor to the conveyance roller.

In addition, the card reader 1 is equipped with: a shutter member 7 for closing the card passageway 4; and a lever member 8 for restricting the operation of the shutter member 7 that is disposed at a closed position 7A at which the shutter member 7 closes off the card passageway 4. The shutter member 7 and the lever member 8 are disposed at a front end side portion of the card reader 1. Specifically, the shutter member 7 and the lever member 8 are disposed just at the depth side of the card insertion slot 3. Hereinafter, a configuration of the front end side portion of the card reader 1 will be described.

### (Configuration of Front End Side portion of Card Reader)

FIG. 3 is a front view of the front end side portion of the card reader 1 shown in FIG. 2, wherein FIG. 3 (A) is a view showing a state in which operation of the shutter member 7 is restricted, and FIG. 3 (B) is a view showing a state in which restriction of the operation of the shutter member 7 is released. FIG. 4 is a plan view of the front end side portion of the card reader 1 shown in FIG. 2, wherein FIG. 4 (A) is a view showing a state in which operation of the shutter member 7 is restricted, and FIG. 4 (B) is a view showing a state in which restriction of the operation of the shutter member 7 is released. FIG. 5 is a schematic view for illustrating an urging state of the shutter member 7 shown in FIG. 2.

As described above, the shutter member 7 is disposed just at the depth side of the card insertion slot 3, and is provided to close off the front end side portion of the card passageway 4. The lever member 8 is disposed at a respective one of both sides in the transverse direction of the card passageway 4. That is, the card reader 1 is equipped with two lever members 8, each of which is present at the respective one of both sides at the left and right of the card passageway 4. The shutter member 7 and the two lever members 8 are disposed at a substantially same position in the longitudinal direction. Also, the shutter member 7 and the two lever members 8 are disposed to be adjacent to each other in the transverse direction.

In addition, the card reader 1 is equipped with: a supporting shaft 10 that turnably supports the shutter member 7; and two supporting shafts 11, each of which turnably supports a respective one of the two lever members 8. The supporting shaft 10 is disposed so that the axial direction of the supporting shaft 10 and the transverse direction are coincident with each other. A length of the supporting shaft 10 is larger than a width in the transverse direction of the card passageway 4. Further, the supporting shaft 10 is disposed to be upper than the card passageway 4. Both end side portions of the supporting shaft 10 are supported by a frame of the card reader 1. The supporting shafts 11 each are disposed so that the axial direction of the supporting shaft 11 and the longitudinal direction are coincident with each other. Furthermore, the supporting shafts 11 each are disposed lower than the card passageway 4. The two supporting shafts 11 each are disposed at a respective one of both outsides in the transverse direction of the card passageway 4.

The shutter member 7 is formed in the shape of an elongated block in the transverse direction as a whole. This shutter member 7 is equipped with: a closing part 7a that closes off the card passageway 4; and two supporting parts 7b that are supported by the supporting shaft 10. The closing part 7a constitutes a lower end side portion of the shutter member 7 when the shutter member 7 is present at the closed position 7A. Also, the closing part 7a is disposed just under the supporting shaft 10 when the shutter member 7 is present at the closed position 7A. A respective one of the two supporting parts 7b constitutes a respective one of both end side portions at the left and right of the shutter member 7.

In the closing part 7a, a plurality of protrusion parts 7c that protrude to the lower side when the shutter member 7 is present at the closed position 7a are formed. The plurality of protrusion parts 7c are formed at predetermined intervals in the transverse direction. In a top face of a lower frame 12 of the card reader 1 that constitutes a lower face of the card passageway 4, a plurality of depression parts 12a for preventing interference with the protrusion parts 7c are formed. The supporting part 7b is formed in a substantially cylindrical shape. In the inner circumferential side of the supporting part 7b, the supporting shaft 10 is inserted, and the shutter member 7 is made turnable with the transverse direction being defined as an axial direction of turning. In the supporting part 7b, a protrusion part 7d that protrudes to the outside in the radial direction is formed. The protrusion part 7d protrudes toward an upper side when the shutter member 7 is present at the closed position 7A.

The shutter member 7 at the closed position 7A, as shown in FIG. 5, is made turnable in the clockwise direction when seen from the right side (clockwise direction), while it is also made turnable in the counterclockwise direction when seen from the right side (counterclockwise direction). The shutter member 7 is urged toward the closed position 7a by the shutter urging member 13. Specifically, the shutter member 7 is urged by the shutter urging member 13 in the clockwise direction and counterclockwise direction when seen from the right side, toward the closed position 7a, about the supporting shaft 10 that is disposed upper than the card passageway 4, and urging force of the shutter urging member 13 does not act on the shutter member 7 at the closed position 7A. That is, the closed position 7A is equivalent to a neutral position of the shutter member 7 that is urged by the shutter urging member 13.

The shutter urging member 13 is a twisted coil spring. As shown in FIG. 5, the shutter urging member 13 is equipped with: a cylinder part 13a shaped like a cylinder (specifically, formed in a cylindrical shape) into which the supporting shaft 10 is to be inserted; a first arm part 13b extending from a rear side to an upper side of one end (for example, right end) of the cylinder part 13a; and a second arm part 13b extending from a front side to an upper side of the other end (for example, left end) of the cylinder part 13a. In the embodiment, in the first arm part 13b, an upper end of the first arm part 13b inclines slightly rearward, and in the second arm part 13c, an upper end of the second arm part 13c inclines slightly frontward. The shutter urging member 13 is disposed in one location at a center of the shutter member 7 in the transverse direction. Incidentally, in FIG. 2 to FIG. 4, the shutter urging member 13 is not shown. Also, the shutter urging member 13 may be disposed in a location that is shifted from the center of the shutter member 7 in the transverse direction. In addition, the shutter urging member 13 may be disposed in plurality in two locations at both end sides of the shutter member 7 in the transverse direction.

In an upper frame 16 of the card reader 1, that constitutes a top face of the card passageway 4, as shown in FIG. 5, a stopper 16a that restrains a turning range of the shutter member 7 in the counterclockwise direction when seen from the right side and a stopper 16b that restrains a turning range of the shutter member 7 in the clockwise direction when seen from the right side are formed. The upper frame 16 of the embodiment is a frame that constitutes one face of the card passageway 4 in the thickness direction of the card 2.

An upper end part (tip end part) of the first arm part 13b is capable of coming into contact with a front face side of the stopper 16a, and comes into contact with the front face side of the stopper 16a when the shutter member 7 is present at the closed position 7a. An upper end part (tip end part) of the second arm part is capable of coming into contact with a rear face side of the stopper 16b, and comes into contact with the rear face side of the stopper 16b when the shutter member 7 is present at the closed position 7a. That is, when the shutter member 7 is present at the closed position 7A, as shown in FIG. 5, the tip end part of the first arm part 13b comes into contact with the stopper 16a from a front side, and the tip end part of the second arm part comes into contact with the stopper 16b from a rear side. The stopper 16a of the embodiment is a first contact part with which the tip end part of the first arm part 13b is capable of coming into contact from the front side, and the stopper 16b is a second contact part with which the tip end part of the second arm part 13c is capable of coming into contact from the rear side.

In addition, at an upper end side of the shutter member 7, a contact part 7f as a third contact part that is capable of coming into contact with the first arm part 13b from the rear side and a contact part 7g as a fourth contact part that is capable of coming into contact with the second arm part 13c from the front side are formed. When the shutter member 7 is present at the closed position 7A, the contact part 7f comes into contact with the first arm part 13b from the rear side, and the contact part 7g comes into contact with the second arm part 13c from the front side. Incidentally, the shutter urging member 13 may be another spring member such as a tension coil spring, a compression coil spring or a plate spring.

The lever member 8 is equipped with: a card contact part 8a with which the card 2 comes into contact in a case where the width in the lateral direction (the width in the transverse direction) of the card 2 that is inserted into the card insertion slot 3 is a regular width; a restriction part 8b that restricts the operation of the shutter member 7 at the closed position 7A; and two supporting parts 8c that are supported by the supporting shaft 11. The supporting part 8c, the card contact part 8a, and the restriction part 8b are disposed in sequential order from the lower side. Further, at an upper end side of the lever member 8, a through hole 8d through which the supporting shaft 10 is to be inserted is formed.

The supporting part 8c is formed in a substantially cylindrical shape.
Two supporting parts 8c are disposed at predetermined intervals in the longitudinal direction. In the inner circumferential side of the two supporting parts 8c, the supporting shaft 11 is inserted, and the lever member 8 is made turnable with the longitudinal direction being defined as an axial direction of turning. The through hole 8d is formed so as to pass through the lever member 8 in the transverse direction. Furthermore, the through hole 8d is formed in the shape of a long hole that is elongated in the vertical direction in order to prevent interference between the lever member 8 and the supporting shaft 10 when the lever member 8 turns.

As described above, the lever member 8 is disposed at the respective one of both sides in the transverse direction of the card passageway 4. The card contact part 8a is disposed to face the card passageway 4 from both sides in the transverse direction of the card passageway 4, and can appear or disappear relative to the card passageway 4. A respective one of both end faces of the card 2 in the transverse direction comes into contact with a respective one of the two card contact parts 8a in a case where the width in the transverse direction of the card 2 that is inserted into the card insertion slot 3 is a regular width. The restriction part 8b is formed to protrude to the inside in the transverse direction so as to be able to come into contact with the protrusion part 7d of the shutter member 7 from the front side. A rear face of the restriction part 8b is formed in a flat shape that is orthogonal to the longitudinal direction.

The lever member 8 is urged toward a restriction position 8A at which the restriction part 8b restricts the operation of the shutter member 7 by the lever urging member 14 (refer to FIG. 2 (A), FIG. 3 (A), and FIG. 4 (A)). Specifically, the lever member 8 is urged by the lever urging member 14 so that the upper end side of the lever 8 proceeds to the inside in the transverse direction about the supporting shaft 11 that is disposed lower than the card passageway 4. That is, the lever member 8 that is disposed at the right side of the card passageway 4 is urged in the counterclockwise direction when seen from the front side, and the lever member 8 that is disposed at the left side of the card passageway 4 is urged in the clockwise direction when seen from the front side. The lever urging member 14 is a twisted coil spring, for example, and the supporting shaft 11 is inserted through the lever urging member 14. Incidentally, in FIG. 3 and FIG. 4, the lever urging member 14 is not shown. Also, the lever urging member 14 may be another spring member such as a tension coil spring, a compression coil spring or a plate spring.

In the upper frame 16, a stopper (not shown) for preventing the turning of the lever member 8 so that the upper end side of the lever member 8 at the restriction position 8A further proceeds to the inside in the transverse direction is provided. Thus, when an external force other than the urging force of the lever urging member 14 does not act on the lever member 8, and the lever member 8 stops at the restriction position 8A. When the lever member 8 is present at the restriction position 8A, the control part 8b is disposed at a front side of the protrusion part 7d of the shutter member 7. Therefore, when the lever member 8 is present at the restriction position 8A, the shutter member 7 is restricted in terms of turning in the counterclockwise direction when seen from the right side, and even if the closing part 7a is pressed toward the depth side, the shutter member 7 does not turn. That is, when the lever member 8 is present at the restriction position 8A, even if the closing part 7a is pressed toward the depth side, the protrusion part 7d comes into contact with the restriction part 8b, and thus the shutter member 7 does not turn.

In this manner, in the embodiment, when the closing part 7a is pressed toward the depth side in the state in which the shutter member 7 is present at the closed position 7A and the lever member 8 is present at the restriction position 8A, the protrusion part 7d comes into contact with the restriction part 8b, and the operation of the shutter member 7 at the closed position 7A is restricted. In addition, in the embodiment, the restriction part 8b is disposed only at the side with which the protrusion part 7d comes into contact when the closing part 7a is pressed toward the depth side in the state in which the shutter member 7 is present at the closed position 7a and the lever member 8 is present at the restriction position 8A. That is, in the state in which the shutter member 7 is present at the closed position 7A and the lever member 8 is present at the restriction position 8A, the restriction part 8b is disposed only at the front side of the protrusion part 7d, and the restriction part 8b is not disposed at the depth side of the protrusion part 7d.

### (Operation of Lever Member and Shutter Member at the Time of Card Insertion)

In the card reader 1, during the standby mode before the card 2 is inserted into the card insertion slot 3, the shutter member 7 is present at the closed position 7A, and the lever member 8 is present at the restriction position 8A. In this state, when the card 2 of which width in the transverse direction is a regular width is inserted into the card insertion slot 3, a respective one of both end faces of the card 2 in the transverse direction comes into contact with a respective one of two card contact parts 8a, and two lever members 8 turn about the supporting shaft 11. Specifically, the two lever members 8 turn so that the upper end side of each of the lever members 8 opens to the outside in the transverse direction.

When the card 2 of which width in the transverse direction is a regular width is inserted into the card insertion slot 3 and then the two lever members 8 turns, as shown in FIG. 2 (B), FIG. 3 (B), and FIG. 4 (B), two restriction parts 8b shift to a position with which the protrusion part 7d of the shutter member 7 is not capable of coming into contact, and the restricted state of the shutter member 7 by the restriction parts 8b is released. That is, the two lever members 8 turn to a release position 8B at which the restricted state of the shutter member 7 by the restriction parts 8b is released. Afterwards, when the card 2 is inserted into the depth side and a depth end of the card 2 comes into contact with the closing part 7a of the shutter member 7 and then the closing part 7a is pressed to the depth side by the card 2, the shutter member 7 operates so as to allow passage of the card 2. Specifically, the shutter member 7 turns in the counterclockwise direction when seen from the right side.

Also, when the shutter member 7 turns, the card 2 is loaded to the inside of the card reader 1. When the card 2 is completely loaded to the inside of the card reader 1, a front end of the card 2 is disposed to be deeper than the shutter member 7. Thus, the shutter member 7 is returned to the closed position 7A by the urging force of the shutter urging member 13. In addition, after the shutter member 7 has been returned to the closed position 7A, the lever member 8 is returned to the restriction position 8A by the urging force of the lever urging member 14.

When the processing of the card 2 by the card reader 1 completes, the card 2 is discharged from the card reader 1. At the time of discharge of the card 2, the front end of the card 2 comes into contact with the closing part 7a of the shutter member 7 and then presses the closing part 7a to the front side. As described above, in the state in which the shutter member 7 is present at the closed position 7A and the lever member 8 is present at the restriction position 8A, the restriction part 8b is disposed only at a front side of the protrusion part 7d, and the restriction part 8b is not disposed at the depth side of the protrusion part 7d, and therefore, if the closing part 7a is pressed to the front side by the card 2, the shutter member 7 turns in the clockwise direction when seen from the right side so as to allow passage of the card 2. Further, when the shutter member 7 turns, the card 2 is discharged from the card reader 1. When the read 2 is discharged from the card reader 1, the shutter member 7 is returned to the closed position 7A by the urging force of the shutter urging member 13.

Incidentally, at the time of discharge of the card 2 as well, if the respective one of both end faces of the card 2 in the transverse direction comes into contact with the respective one of the two card contact parts 8a, the lever member 8 moves from the restriction position 8A to the release position 8B. Furthermore, when the card 2 is discharged from the card reader 1, the lever member 8 is returned to the restriction position 8A by the urging force of the lever urging member 14 after the shutter member 7 has been returned to the closed position 7A.

On the other hand, in a case where an irregularly shaped card 2 of which width in the transverse direction is not a regular width has been inserted into the card insertion slot 3, an end face in the transverse direction of the card 2 does not come into contact with at least one card contact part 8a of the two card contact parts 8a. Alternatively, even if the end face in the transverse direction of the card 2 comes into contact with the two card contact parts 8a in the case where the irregularly shaped card 2 of which width in the transverse direction is not the regular width has been inserted into the card insertion slot 3, the two lever members 8 do not turn to an extent such that the two restriction parts 8b move up to a position with which the protrusion part 7d does not come into contact.

Thus, in this case, at least one restriction part 8b of the two restriction parts 8b is disposed at the front side of the protrusion part 7d, and the restricted state of the shutter member 7 by the restriction part 8b is not released. That is, the at least one lever member 8 does not turn from the restriction position 8A to the release position 8B. Therefore, even if the card 2 that is inserted further into the depth side comes into contact with the closing part 7a and then the closing part 7a is pressed toward the depth side, the shutter member 7 does not turn, and the card 2 is not loaded to the inside of the card reader 1.

### (Main Advantageous Effects of the Embodiment)

As has been described hereinabove, when the card 2 of which width in the transverse direction is the regular width is inserted into the card insertion slot 3, the respective one of both end faces of the card 2 in the transverse direction comes into contact with the respective one of the two card contact parts 8a, the two lever members 8 turn about the supporting shaft 11, and the two restriction parts 8b move up to a position which does not come into contact with the protrusion part 7d. That is, the two lever members 8 turn to the release position 8B at which the restricted state of the shutter member 7 by the restriction parts 8b is released. On the other hand, in the case where the irregularly shaped card 2 of which width in the transverse direction is not the regular width has been inserted into the card insertion slot 3, at least one restriction part 8b of the two restriction parts 8b is disposed at the front side of the protrusion part 7d, and the at least one lever member 8 does not turn to the release position 8B. Thus, in the embodiment, in the case where the irregularly shaped card 2 of which width in the transverse direction is not the regular width has been inserted into the card insertion slot 3, the shutter member 7 at the closed position 7A does not turn. Therefore, in the embodiment, it is possible to prevent the loading of the irregularly shaped card 2 to the inside of the card reader 1.

In addition, in the embodiment, the shutter member 7 is urged by the shutter urging member 13 toward the closed position 7A, and after the restricted state of the shutter member 7 by the restriction part 8b has been released, when the card 2 that is inserted further into the depth side comes into contact with the closing part 7a of the shutter member 7 and then the closing part 7s is pressed by the card 2, the shutter member 7 operates so as to allow passage of the card 2. Thus, in the embodiment, there is no need for a driving source that drives the shutter member 7. Also, in the embodiment, there is no need for a sensor that is included in the card reader described in Patent Literature 1 as well. Therefore, in the embodiment, it is not only possible to prevent the irregularly shaped card 2 from being loaded to the inside of the card reader 1 but also possible to reduce the cost of the card reader 1.

In the embodiment, the shutter member 7 and the lever member 8 are disposed to be adjacent to each other in the transverse direction, and are disposed at a substantially same position in the longitudinal direction. Thus, in the embodiment, it is possible to downsize the card reader 1 in the longitudinal direction in comparison with the case in which the shutter member 7 and the lever member 8 are disposed at the shifted position in the longitudinal direction.

In the embodiment, when the card 2 is completely loaded to the inside of the card reader 1, the shutter member 7 is returned to the closed position 7A and the lever member 8 is returned to the restriction position 8A, and however, in the state in which the shutter member 7 is present at the closed position 7A and the lever member 8 is present at the restriction position 8A, the restriction part 8b is disposed only at the front side of the protrusion part 7d, and the restriction part 8b is not disposed at the depth side of the protrusion part 7d. Thus, in the embodiment, for example, even if the card 2 of which width in the transverse direction at the depth side of the card 2 (that is, the tip end side in the insertion direction of the card 2) is the regular width, but width in the transverse direction of the front end side of the card 2 (that is, the tip end side in the discharge direction of the card 2) is not the regular width, has been loaded to the inside of the card reader 1, when the front end of the card 2 that is discharged from the card reader 1 comes into contact with the closing part 7a and then the closing part 7a is pressed to the front side, the shutter member 7 turns in the direction in which the shutter member 7 opens the card passageway 4. Therefore, in the embodiment, even if the card 2 of which width in the transverse direction at the depth side of the card 2 is the regular width, but of which width in the transverse direction of the front end side of the card 2 is the regular width, has been loaded to the inside of the card reader 1, it is possible to discharge, from the card reader 1, the card 2 that is loaded in the card reader 1.

In the embodiment, the shutter urging member 13 is a twisted coil spring, and when the shutter member 7 is present at the closed position 7A, the tip end part of the first arm part 13b of the shutter urging member 13 comes into contact with the stopper 16a from the front side, and the tip end part of the second arm part 13c comes into contact with the stopper 16b from the rear side. Also, in the embodiment, at the upper end side of the shutter member 7, the contact part 7f that is capable of coming into contact with the first arm part 13b from the rear side and the contact part 7g that is capable of coming into contact with the second arm part 13c from the front side are formed. Thus, in the embodiment, even if the shutter member 7 at the closed position 7A turns in either of the clockwise direction and the counterclockwise direction when seen from the right side, it is possible to return the shutter member 7 to the closed position 7A by a common shutter urging member 13. Therefore, in the embodiment, it is possible to simplify the configuration of the card reader 1.

In the embodiment, when the shutter member 7 is present at the closed position 7A, the contact part 7f of the shutter member 7 comes into contact with the first arm part 13b from the rear side, and the contact part 8g of the shutter member 7 comes into contact with the second arm part 13c from the front side. Thus, in the embodiment, it is possible to restrain an unsteady state of the shutter member 9 at the closed position 7A. Therefore, in the embodiment, it is possible to prevent interference between the restriction part 8b and the protrusion part 7d that is exerted by the unsteady state of the shutter member 7, when the lever member 8 is returned from the release position 8B to the restriction position 8A in the state in which the shutter member 7 is present at the closed position 7A. As a result, it is possible to reliably return the lever member 8 from the release position 8B to the restriction position 8A.

### (Other Embodiments)

Although the embodiment described above is an example of the preferred embodiments of the present invention, a variety of modifications can be implemented without departing from the gist of the present invention without being limitative thereto.

In the embodiment described above, when the card 2 of which width in the transverse direction is the regular width has been inserted into the card insertion slot 3, the lever member 8 is made turnable with the longitudinal direction being defined as an axial direction of turning so that the restricted state of the shutter member 7 by the restriction part 8b is released. In addition to this, for example, when the card 2 of which width in the transverse direction is a regular width has been inserted into the card insertion slot 3, the lever member 8 may be made turnable with the vertical direction being defined as an axial direction of turning, or may be made turnable with the transverse direction being defined as an axial direction of turning so that the restricted state of the shutter member 7 by the restriction part 8b is released. Further, when the card 2 of which width in the transverse direction is the regular width has been inserted into the card insertion slot 3, the lever member 8 may slide in the transverse direction or may slide in the vertical direction so that the restricted state of the shutter member 7 by the restriction part 8b is released.

In the embodiment described above, when the card 2 of which width in the transverse direction is the regular width has been inserted into the card insertion slot 3, the card 2 comes into contact with the card contact part 8a and the lever member 8 operates and then the restricted state of the shutter member 7 by the restriction part 8b is released. In addition to this, for example, when the card 2 of which thickness is a regular thickness has been inserted into the card insertion slot 3, it may be that the card 2 comes into contact with the card contact part 8s and the lever member 8 operates and then the restricted state of the shutter member 7 by the restriction part 8b is released. In this case, after the card 2 of which thickness is a regular thickness has been inserted into the card insertion slot 3, when the card 2 comes into contact with the card contact part 8a, the lever member 8 slides in the vertical direction so that the restricted state of the shutter member 7 by the restriction part 8b is released. In this case as well, it is possible to prevent the irregularly shaped card 2 from being loaded to the inside of the card reader 1.

Incidentally, in a case where the lever member 8 that slides in the vertical direction is disposed at a respective one of both end sides of the card passageway 4 in the transverse direction, when the card 2 of which width in the transverse direction is the regular width and of which thickness is the regular thickness has been inserted into the card insertion slot 3, it is possible to slide the two lever members 8 in the vertical direction so that the restricted state of the shutter member 7 by the restriction part 8b is released. In this case, it is possible to load, to the inside of the card reader 1, only the card 2 of which width in the transverse direction is the regular width and of which thickness is the regular thickness.

Although, in the embodiment described above, the shutter member 7 is made turnable with the transverse direction being defined as an axial direction of turning, the shutter member 7 may be slidable in the vertical direction. In this case, when the card 2 comes into contact with a lower end side portion of the shutter member 7, a predetermined incline face is formed at the lower end side portion of the shutter member 7 so that the shutter member 7 slides to an upper side. Also, although, in the embodiment described above, when the shutter member 7 is present at the closed position 7A, the closing part 7a is disposed just under the supporting shaft 10, the closing part 7a and the supporting shaft 10 may be shifted from each other in the longitudinal direction when the shutter member 7 is present at the closed position 7A.

In the embodiment described above, in the state in which the shutter member 7 is present at the closed position 7A and the lever member 8 is present at the restriction position 8A, the restriction part 8b is disposed only at the front side of the protrusion part 7d, and the restriction part 8b is not disposed at the depth side of the protrusion part 7d. In addition to this, for example, in the state in which the shutter member 7 is present at the closed position 7A and the lever member 8 is present at the restriction position 8A, the restriction part 8b may be disposed at a respective one of the front side and the depth side of the protrusion part 7d. In this case, for example, in a case where the card 2 that is discharged from the card reader 1 of which width in the transverse direction at the front end side is a regular width, a card contact part with which the card 2 comes into contact is formed in the lever member 8, and when the front end side of the card 2 that is discharged from the card reader 1 comes into contact with this card contact part, the lever member 8 at the restriction position 8A turns to the release position 8B.

Although, in the embodiment described above, the shutter member 7 is urged by the common shutter urging member 13 in the clockwise direction and counterclockwise direction when seen from the right side, a shutter urging member that urges the shutter member 7 in the clockwise direction when seen from the right side and a shutter urging member that urges the shutter member 7 in the counterclockwise direction when seen from the right side may be individually provided. In addition, although, in the embodiment described above, when the shutter member 7 is present at the closed position 7A, the contact part 7f comes into contact with the first arm part 13b and the contact part 7g comes into contact with the second arm part 13c, the contact part 7f may not come into contact with the first arm part 13b and the contact part 7g may not come into contact with the second arm part 13c when the shutter member 8 is present at the closed position 7A.

Although, in the embodiment described above, the shutter member 7 and the lever member 8 are disposed at the substantially same position in the longitudinal direction, the shutter member 7 and the lever member 8 may be shifted from each other in the longitudinal direction. In addition, although, in the embodiment described above, the card 2 is the vinyl chloride-based card of which thickness is of the order of 0.7 to 0.8 mm, the card 2 may be a PET (polyethylene terephthalate) card of which thickness is of the order of 0.18 to 0.36 mm or may be a paper card of a predetermined thickness or the like. Further, although, in the embodiment described above, the card reader 1 is a card conveyance-type card reader equipped with a card conveyance mechanism, the card reader 1 may be a manually driven card reader of such a type that insertion and withdrawal of the card 2 is manually performed.

### DESCRIPTION OF REFERENCE NUMERALS

- 1: Card reader
- 2: Card
- 3: Card insertion slot
- 4: Card passageway
- 7: Shutter member
- 7A: Closed position
- 7a: Closing part
- 7b: Supporting part
- 7d: Protrusion part
- 7f: Contact part (third contact part)
- 7g: Contact part (fourth contact part)
- 8: Lever member
- 8A: Restriction position
- 8B: Release position
- 8a: Card contact part
- 8b: Restriction part
- 10: Supporting shaft
- 13: Shutter urging member (twisted coil spring)
- 13a: Cylinder part
- 13b: First arm part
- 13c: Second arm part
- 14: Lever urging member
- 16: Upper frame (frame)
- 16a: Stopper (first contact part)
- 16b: Stopper (second contact part)
- X: Card passing direction
- X2: Card insertion direction
- Y: First direction
- Z: Card thickness direction

## Claims

1. A card reader comprising:
a card insertion slot into which a card is to be inserted;
a card passageway through which the card inserted into the card insertion slot passes;
a shutter member that closes the card passageway; and
a shutter urging member that urges the shutter member toward a closed position at which the shutter member closes off the card passageway;
a lever member having:
a card contact part with which the card comes into contact in at least either one of a case in which, a direction orthogonal to a passing direction of the card passing through the card passageway and a thickness direction of the card being defined as a first direction, a width of the card that is inserted into the card insertion slot has a regular width in the first direction is a regular width and a case in which a thickness of the card that is inserted into the card insertion slot is a regular thickness, and
a restriction part that restricts an operation of the shutter member at the closed position; and
a lever urging member that urges the lever member toward a restriction position at which the restriction part restricts the operation of the shutter member,
wherein when the card that is inserted into the card insertion slot comes into contact with the card contact part, the lever member shifts to a release position at which a restricted state of the shutter member by the restriction part is released and thereafter when the card that is inserted further comes into contact with the shutter member and the shutter member is pressed by the card, the shutter member operates so as to allow passage of the card.

2. The card reader according to claim 1, wherein
the card contact part is disposed to face the card passageway from both sides of the card passageway in the first direction and
in a case where the width in the first direction of the card is a regular width, the card comes into contact with the card contact part and then the lever member shifts to the release position.

3. The card reader according to claim 2, wherein
the shutter member and the lever member are disposed to be adjacent to each other in the first direction.

4. The card reader according to any one of claimed 1 to 3, wherein
the lever member is made turnable with the passing direction of the card being defined as an axial direction of turning.

5. The card reader according to any one of claims 1 to 4, wherein
the shutter member is made turnable with the first direction being defined as an axial direction of turning.

6. The card reader according to claim 5, further comprising:
a supporting shaft that turnably supports the shutter member,
wherein the supporting shaft is disposed so that an axial direction of the supporting shaft and the first direction are coincident with each other,
the shutter member includes:
a supporting part formed in a substantially cylindrical shape and supported by the supporting shaft; and
a closing part that closes off the card passageway,
the supporting shaft is inserted into an inner circumferential side of the supporting part,
a protrusion part that protrudes to an outside in a radial direction of the supporting part is formed in the supporting part, and
when the closing part is pressed in an insertion direction of the card into the card insertion slot in a state in which the shutter member is present at the closed position and the lever member is present at the restriction position, the protrusion part comes into contact with the restriction part and then the operation of the shutter member at the closed position is restricted.

7. The card reader according to claim 6, wherein
when the closing part is pressed in the insertion direction of the card in the state in which the shutter member is present at the closed position and the lever member is present at the restriction position, the protrusion part is disposed only at a side with which the protrusion part comes into contact.

8. The card reader according to any one of claims 5 to 7, further comprising:
a supporting shaft that turnably supports the shutter member; and
a frame that constitutes one face of the card passageway in a thickness direction of the card,
wherein the supporting shaft is disposed so that the axial direction of the supporting shaft and the first direction are coincident with each other,
the shutter urging member is a twisted coil spring,
the twisted coil spring includes:
a cylinder part formed in a cylindrical shape, through which the supporting shaft is to be inserted,
a first arm part extending from one side in the passing direction of the card to one side in the thickness direction of the card, at an end of the cylinder part, and
a second arm part extending from another side in the passing direction of the card to one side in the thickness direction of the card, at another end of the cylinder part,
in the frame, a first contact part with which a tip end part of the first arm part is capable of coming into contact from another side in the passing direction of the card and a second contact part with which a tip end part of the second arm part is capable of coming into contact from one side of the passing direction of the card are formed,
in the shutter member, a third contact part that is capable of coming into contact with the first arm part from one side in the passing direction of the card and a fourth contact part that is capable of coming into contact with the second arm part from another side in the passing direction of the card are formed, and
when the shutter member is present at the closed position, the tip end part of the first arm part comes into contact with the first contact part, and the tip end part of the second arm part comes into contact with the second contact part.

9. The card reader according to claim 8, wherein
when the shutter member is present at the closed position, the third contact part comes into contact with the first arm part from one side in the passing direction of the card, and the fourth contact part comes into contact with the second arm part from another side in the passing direction of the card.
